# EUROPÄISCHE PATENTSCHRIFT

(11) **EP 3 392 084 B1**
(45) Veröffentlichungstag und Bekanntmachung des Hinweises auf die Patenterteilung: **20.01.2021**
(21) Anmeldenummer: 17167429.4
(22) Anmeldetag: 20.04.2017
(51) Int. Cl.: B60H 1/00, B60P 3/20, G08C 17/02, H04Q 9/00

(54) **NUTZFAHRZEUGANHÄNGER**
COMMERCIAL VEHICLE TRAILER
REMORQUE DE VÉHICULE UTILITAIRE

(43) Veröffentlichungstag der Anmeldung: 24.10.2018
(73) Patentinhaber: Schmitz Cargobull AG, 48341 Altenberge (DE)
(72) Erfinder: Honkomp, Dieter, 49439 Steinfeld (DE)
(74) Vertreter: Baur & Weber Patentanwälte PartG mbB

(56) Entgegenhaltungen:
- EP-A1- 2 799 264
- JP-A- H1 053 047
- US-A- 4 970 496
- US-A1- 2011 193 710
- US-A1- 2013 340 444
- US-A1- 2015 105 976
- US-B1- 6 476 794

## Beschreibung

Die Erfindung betrifft einen Nutzfahrzeuganhänger, insbesondere einen Kühlsattelauflieger oder einen Kühlanhänger.

Aus dem allgemeinen Stand der Technik ist es bekannt, Nutzfahrzeuganhänger mit einem Kühlgerät auszustatten, um einen Frachtraum zum Transport verderblicher Waren mit einer Kühlwirkung zu versehen. Dazu werden Kühlgeräte typischerweise an einer in Hauptfahrtrichtung befindlichen Vorderseite befestigt, wobei Kühlluft über entsprechende Öffnungen in den Frachtraum gelangt. Auf gegenüberliegenden Seiten können Türen oder Ladebordwände angeordnet sein, die ein Beladen derartiger Nutzfahrzeuganhänger ermöglichen. Alternativ oder zusätzlich können auch seitliche Öffnungen vorgesehen sein.

Kühlgeräte für Nutzfahrzeuge sind aus dem Stand der Technik bekannt. So ist in der EP 2 799 264 A1 ein Nutzfahrzeug für den Transport von temperaturgeführtem Transportgut beschrieben. Das Nutzfahrzeug weist dabei einen Aufbau, der einen das Transportgut aufnehmenden Laderaum umgibt, eine Kältemaschine, die temperierte Luft in den Laderaum abgibt und eine Steuereinrichtung umfasst, die die Kältemaschine steuert, und eine zentrale Datenverarbeitungseinrichtung auf, die Betriebsparameter des Nutzfahrzeugs erfasst, verarbeitet oder abspeichert. Die Steuereinrichtung der Kältemaschine ist mit der Datenverarbeitungseinrichtung des Nutzfahrzeugs über eine Datenverbindung zur Übertragung von Daten verbunden. Die Steuereinrichtung steuert die Kältemaschine in Abhängigkeit von Daten, die die Datenverarbeitungseinrichtung der Steuereinrichtung über die Datenverbindung zur Verfügung stellt.

Moderne Nutzfahrzeuganhänger sind typischerweise mit elektronischen Bremssteuereinrichtungen ausgestattet, bei denen anhängerseitig beispielsweise die Drehgeschwindigkeiten einzelner Räder aufgenommen werden, um daraus Steuersignale für das Bremssystem abzuleiten bzw. kritische Fahrsituationen erkennen zu können. Eine derartige elektronische Bremssteuereinrichtung wird typischerweise sowohl zugfahrzeug- als auch anhängerseitig mittels einer standardisierten Übertragungsschnittstelle ausgestattet, so dass Daten zwischen dem Zugfahrzeug und dem Nutzfahrzeuganhänger im Rahmen einer Punkt-zu-Punkt-Verbindung ausgetauscht werden können. Dabei ist es auch möglich, eine derartige elektronische Bremssteuereinrichtung mit weiteren Steuereinheiten zu verbinden.

Aus der US 4,970,496 A ist ein Datenerfassungsmodul für Kühlfahrzeuge gezeigt, das mit einem oder mehreren Temperatursensoren verbunden ist, die eine Temperatur im Anhänger messen. Das Datenerfassungsmodul kann mit weiteren Sensoren im Anhänger verbunden werden. Das Datenerfassungsmodul umfasst einen Mikroprozessor und einen Speicher, der mit den Sensoren verbunden ist, wobei zusätzlich Zeitdaten bereitgestellt werden, die Temperaturdaten zugeordnet werden können. In einem solchen System kann ein Steuer- und Anzeigemodul, das eine separate tragbare Steuer- und Anzeigeeinheit umfasst, dem Fahrzeugführer Temperaturdaten und Abstandsdaten, Warnungen an den Fahrzeugführer, wenn sich die Temperatur des Anhängers unzulässigen Grenzwerten nähert, Warnungen während der Unterstützung des Anhängers bei drohender Kollision mit einem Objekt und Warnungen, wenn die Anhängertüren ohne Befugnis geöffnet werden, bereitstellen.

Aus der US 2011/193710 A1 ist ein Überwachungssystem für einen Kühlcontainer mit temperaturempfindlicher Ladung bekannt. Das System beinhaltet Sensoren, die im gesamten Behälter und/oder einem zugehörigen Fahrzeug angeordnet sind, um Parameter des Behälters oder Fahrzeugs zu messen, wie beispielsweise Temperatur, Bewegung oder Kraftstoffeffizienz. Das System beinhaltet optional einen Empfänger für ein globales Positionierungssystem zur Überwachung der geografischen Lage. Das System kommuniziert mit einer Kommandozentrale, um eine Echtzeit-Verfolgung und Überwachung des Containers zu ermöglichen. Um falsch-positive Alarme zu reduzieren, puffert das System Alarme um mindestens 30 Minuten und blockiert die Signalübertragung, wenn sich der Container innerhalb bestimmter Bereiche, wie Be- und Entladestationen befindet.

Aus der DE 10 2005 025 622 A1 ist eine Fahrzeuganhängeranordnung mit einer Bremssteuereinrichtung bekannt, die mit einer weiteren programmierbaren Steuereinrichtung über wenigstens einen Signalpfad verbunden ist. Hierdurch lassen sich von einem Benutzer kommandierbare Funktionen im Anhänger aus Betriebszustandsgrößen wie Geschwindigkeit, Neigung, Beladung des Anhängers verknüpfen und für unterschiedliche Funktionen sich entsprechende Sicherheitskriterien definieren. Dazu kann eine solche weitere programmierbare Steuereinrichtung sowohl mit einem anhängerseitigen Steuermodul als auch mit einem tragbaren Bedienmodul ausgestattet sein.

Die US 2013/0340444 A1 zeigt ein System zum Steuern einer Temperatur im Inneren eines Fahrzeuganhängers, der zum Transport verderblicher Güter geeignet ist. Das System umfasst eine Fluidverteilungsanordnung und ein Überwachungssystem, das betriebsmäßig mit der Fluidverteilungsanordnung gekoppelt ist, um das Einstellen einer Temperatur im Inneren zu erleichtern. Das System umfasst mindestens einen Sensor und eine Steuerung, die mit dem Sensor und der Fluidverteilungsanordnung gekoppelt ist.

Der Erfindung liegt die Aufgabe zugrunde, den Gebrauch eines Nutzfahrzeuganhängers für einen Benutzer weiter zu verbessern, indem eine einfache Bedienmöglichkeit geschaffen wird.

Diese Aufgabe wird durch die Merkmale des Patentanspruchs 1 gelöst. Vorteilhafte Weiterbildungen der Erfindung sind in den Unteransprüchen angegeben. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Nutzfahrzeuganhänger, insbesondere ein Kühlsattelauflieger oder ein Kühlanhänger geschaffen, der ein Kühlgerät zur Kühlung eines Frachtraums, das eine Benutzerschnittstelle zur Eingabe und zur Anzeige wenigstens einer Betriebsgröße aufweist, und ein außerhalb einer elektronischen Bremssteuereinrichtung angeordnete Steuereinheit umfasst, die mit wenigstens einer Fernwirkungseinheit gekoppelt ist, wobei die Benutzerschnittstelle und das Steuergerät über eine Kommunikationsschnittstelle miteinander verbindbar sind, wobei eine Datenausgabe der Steuereinheit mittels der Benutzerschnittstelle des Kühlgeräts erfolgt.

Demnach wird bei einem erfindungsgemäßen Nutzfahrzeuganhänger die am Kühlgerät vorgesehene Benutzerschnittstelle mit mehreren Aufgaben belegt. Die Benutzerschnittstelle wird typischerweise am Kühlgerät zur Eingabe einer Temperatur oder dergleichen verwendet, wobei auch entsprechende Messwerte oder Soll-Werte dargestellt werden können. Dazu werden Benutzerschnittstellen an Kühlgeräten typischerweise mit berührungssensitiven Bildschirmeinheiten ausgestattet, die sowohl eine Eingabe als auch eine Ausgabe ermöglichen. Über die Kommunikationsschnittstelle ist die Benutzerschnittstelle mit einem Steuergerät verbunden, wobei das Steuergerät mit wenigstens einer Fernwirkungseinheit gekoppelt ist, die typischerweise als Sensoreinheit oder Aktuatoreinheit bereitgestellt ist. Die Fernwirkungseinheit kann allgemein sowohl Messwerte erfassen als auch einen Aktuator ansteuern. Lediglich beispielhaft seien hier Sensoren eines Schließsystems, Reifendrucksensoren, Temperatursensoren oder Füllstandssensoren von Betriebsmitteln genannt. Als Aktuator kann beispielsweise eine Hecktürverriegelung verwendet werden. Die Ausgabe von Daten der Steuereinheit erfolgt nun über die Benutzerschnittstelle des Kühlgeräts, so dass für die Datenausgabe der Steuereinheit keine zusätzlichen Einrichtungen bereitgestellt werden müssen. Durch die Benutzerschnittstelle ergibt sich somit eine effiziente Möglichkeit, Daten der Steuereinheit darzustellen.

In einer anderen Ausführungsform kann zusätzlich auch eine Dateneingabe an die Steuereinheit mittels der Benutzerschnittstelle des Kühlgeräts erfolgen.

Demnach wird die oben beschriebene mehrfache Nutzung der Benutzerschnittstelle von einem Lesemodus in einen Lese-/Schreibmodus erweitert. Die Dateneingabe kann dabei über die berührungssensitive Bildschirmoberfläche der Benutzerschnittstelle erfolgen. Es ist jedoch auch möglich, anstelle einer berührungssensitiven Bildschirmoberfläche Funktionstasten oder dergleichen zu verwenden. Da die Benutzerschnittstelle des Kühlgeräts ohnehin bidirektional ausgebildet ist, stellt die Erweiterung auf einen Lese-/Schreibbetrieb keine zusätzlichen Anforderungen an die zu verwendenden Geräte dar.

In einer weiteren Ausführungsform der Erfindung ist die Kommunikationsschnittstelle zum Betrieb eines Datenaufzeichnungsgeräts, insbesondere eines Druckers koppelbar.

Kühlgeräte werden typischerweise mit Druckern ausgestattet, die eine Aufzeichnung der Betriebszustände ermöglichen. Die Ankopplung eines Druckers an das Kühlgerät kann dabei über die gleiche Kommunikationsschnittstelle erfolgen, die auch zur Ankopplung der Steuereinheit verwendet wird.

Die Steuereinheit kann auch über eine weitere Kommunikationsschnittstelle mit der elektronischen Bremssteuereinrichtung verbindbar sein.

Demnach erfolgt wiederum eine Weitergabe von Daten der elektronischen Bremssteuereinrichtung an die Steuereinheit, so dass Daten des Bremssystems auch in der Steuereinheit zur Verfügung stehen. Desweiteren kann die elektronische Bremssteuereinrichtung auch zur Versorgung der Steuereinheit mit elektrischer Energie verwendet werden.

Die Kommunikationsschnittstelle und/oder die weitere Kommunikationsschnittstelle sind typischerweise als CAN-Bus ausgebildet.

Ein derartiges Bussystem stellt eine zuverlässige Datenübertragung zur Verfügung, die darüber hinaus im Fahrzeugbau weit verbreitet ist.

Gemäß einer weiteren Ausführungsform der Erfindung kann die Benutzerschnittstelle so ausgeführt sein, dass die Ausgabe von Daten der Steuereinheit und die Eingabe bzw. Ausgabe der Betriebsgröße des Kühlgeräts in unterschiedlichen Bereichen der Benutzerschnittstelle erfolgt

Die unterschiedlichen Bereiche der Benutzerschnittstelle können typischerweise neben- oder übereinanderliegend angeordnet sein.

Gemäß einer weiteren Ausführungsform der Erfindung erfolgt der Wechsel zwischen einem ersten Betriebszustand und einem zweiten Betriebszustand mittels einer Benutzereingabe an der Benutzerschnittstelle des Kühlgeräts.

Hierbei wird typischerweise eine menügeführte Benutzeroberfläche zum Einsatz kommen, so dass der Benutzer an der Benutzerschnittstelle auswählen kann, ob nun Daten der Steuereinheit ausgegeben werden bzw. Daten in die Steuereinheit eingegeben werden sollen, oder ob Betriebsgrößen des Klimageräts verändert oder dargestellt werden sollen. Die Benutzerführung an der Benutzerschnittstelle wird typischerweise als Softwareerweiterung nur dann realisiert sein, wenn der Nutzfahrzeuganhänger mit einer entsprechenden Steuereinheit ausgestattet ist.

Gemäß einer weiteren Ausführungsform der Erfindung ist die Benutzerschnittstelle zwischen dem ersten Betriebszustand und dem zweiten Betriebszustand umschaltbar, sobald eine Datenübertragung zwischen der Steuereinheit und der Benutzerschnittstelle erfolgt.

Demnach wird durch den Beginn einer Datenübertragung der Benutzerschnittstelle signalisiert, dass nunmehr ein Wechsel zwischen Betriebszuständen erfolgen soll. Sofern keine Datenübertragung erfolgt, was beispielsweise bei nicht vorhandener oder nicht eingeschalteter Steuereinheit der Fall wäre, befindet sich die Benutzerschnittstelle im ersten Betriebszustand, so dass lediglich die Steuerung der Betriebsgrößen des Kühlgeräts möglich ist. Somit wird die Möglichkeit zum Betriebswechsel automatisch erkannt, so dass die Benutzerführung übersichtlich gestaltet werden kann.

In einer weiteren Ausführungsform kann die Steuereinheit über eine Drahtlos-schnittstelle mit einer weiteren Benutzerschnittstelle, insbesondere ein Form eines Mobiltelefons verbindbar sein.

Demnach wird zusätzlich zur Möglichkeit der Dateneingabe bzw. Datenausgabe am Kühlgerät die Verwendung einer weiteren Benutzerschnittstelle ermöglicht. Die weitere Benutzerschnittstelle kann dabei sowohl von einem Fahrer als auch von einem Spediteur genutzt werden. Die Dateneingabe bzw. Datenausgabe kann dabei per Mobiltelefon oder über ein geeignetes Web-Portal erfolgen.

Die Übertragung der Daten der Steuereinheit kann sowohl für interne Statusinformation als auch für Messwerte der Fernwirkungseinheit herangezogen werden. Interne Statusinformation wäre beispielsweise auch ein Autorisieren des Zugriffs auf die Steuereinheit. Ebenso können die eingegebenen Daten sowohl intern verarbeitet werden oder aber an die Fernwirkungseinheit übertragen werden.

Nachfolgend werden einige Ausführungsbeispiele anhand der Zeichnung näher erläutert. Es zeigen:
- Fig. 1: einen Nutzfahrzeuganhänger gemäß der Erfindung in einem Blockdiagramm,
- Fig. 2: ein Detail einer Benutzerschnittstelle für einen Nutzfahrzeuganhängers gemäß Fig. 1 in einer schematischen Ansicht.

In den Figuren sind gleiche oder gleichwirkende Bauteile mit den gleichen Bezugszeichen versehen.

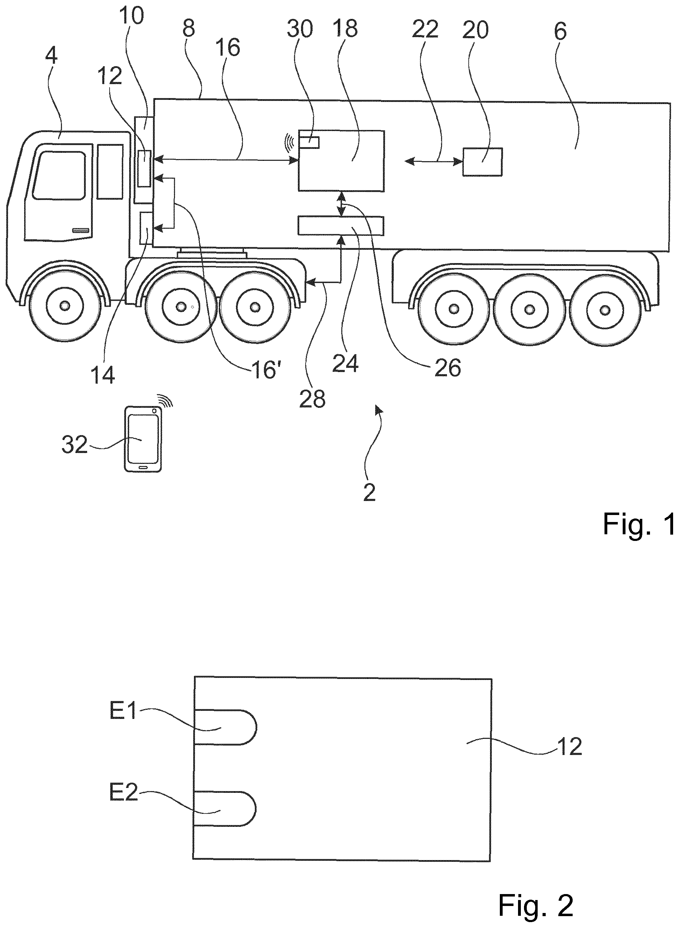

In Fig. 1 ist schematisch ein Sattelzug 2 dargestellt, der ein Zugfahrzeug 4 und einen Nutzfahrzeuganhänger 6 umfasst. Der Nutzfahrzeuganhänger 6 ist im gezeigten Beispiel als Sattelauflieger ausgebildet. Der Nutzfahrzeuganhänger 6 weist einen Kühlkoffer 8 auf, der auf der dem Zugfahrzeug 4 zuweisenden Seite mit einem Kühlgerät 10 versehen ist. Das Kühlgerät 10 stellt auf fachübliche Weise Kühlluft oder Warmluft für den Kühlkoffer 8 zur Verfügung.

Das Kühlgerät 10 ist mit einer Benutzerschnittstelle 12 ausgestattet, die als berührungssensitive Bildschirmeinheit beispielsweise am unteren Ende einer Seitenwand des Kühlgeräts 10 angeordnet ist und mit einer nicht dargestellten Abdeckung versehen sein kann, um Verschmutzung im Fahrbetrieb zu verhindern. Über die Benutzerschnittstelle 12 erfolgt eine Eingabe bzw. eine Anzeige einer Betriebsgröße des Kühlgeräts 10. Im einfachsten Fall kann es sich bei der Betriebsgröße um einen Temperaturwert handeln. Andere Betriebsgrößen, wie z. B. Gebläseeinstellungen oder dergleichen sind jedoch ohne weiteres über die Benutzerschnittstelle 12 darstellbar. Desweiteren ist unterhalb des Kühlgeräts 10 ein Drucker 14 vorgesehen, der ebenfalls Betriebsgrößen des Kühlgeräts 10 ausgeben kann.

Das Kühlgerät 10 ist über eine als CAN-Bus ausgebildete Kommunikationsschnittstelle 16 mit einer Steuereinheit 18 verbunden. Der Drucker 14 ist ebenfalls über die Kommunikationsschnittstelle 16' mit dem Kühlgerät verbunden. Die Kommunikationsschnittstelle 16' kann aber auch als eigenständige Verbindung, beispielsweise als RS232-Schnittstelle ausgebildet sein. Des Weiteren ist die Topologie der als CAN-Bus ausgebildeten Kommunikationsschnittstelle 16 bzw. 16' durchaus auch abwandelbar.

Die Steuereinheit 18 ist mit einer Fernwirkungseinheit 20 gekoppelt, wobei hier wiederum eine entsprechende Datenschnittstelle 22 verwendet werden kann. Desweiteren ist in Fig. 1 eine elektronische Bremssteuereinrichtung 24 gezeigt, die wiederum über eine weitere Kommunikationsschnittstelle 26 mit der Steuereinheit 18 sowie über eine fachübliche Verbindung 28 mit dem Zugfahrzeug 4 verbunden ist. Bei der Fernwirkungseinheit 20 kann es sich beispielsweise um Sensoren oder Aktuatoren handeln.

Über die Kommunikationsschnittstelle 16 ist es somit möglich, Daten an der Benutzerschnittstelle 12 auszugeben, die von der Steuereinheit 18 abgegeben werden. Ebenso ist es möglich, Daten an der Benutzerschnittstelle 12 einzugeben, die dann über die Kommunikationsschnittstelle 16 zur Steuereinheit 18 übertragen werden. Die eingegebenen bzw. ausgegebenen Daten können sowohl intern auf der Steuereinheit 18 verwendet werden oder aber über die Datenschnittstelle 22 an die Fernwirkungseinheit 20 weitergegeben bzw. von dieser gelesen werden.

Dabei kann die Benutzerschnittstelle 12 so ausgeführt sein, dass die Ausgabe von Daten der Steuereinheit 18 und die Eingabe bzw. Ausgabe der Betriebsgröße des Kühlgeräts 10 in unterschiedlichen Bereichen der Benutzerschnittstelle 12 erfolgt. Die unterschiedlichen Bereiche der Benutzerschnittstelle 12 können typischerweise neben- oder übereinanderliegend angeordnet sein.

Um alternativ die von der Benutzerschnittstelle 12 auszugebenden bzw. an der Benutzerschnittstelle 12 einzugebenden Daten entweder dem Kühlgerät 10 oder der Steuereinheit 18 zuordnen zu können, ist in einer anderen Ausführungsform ein Wechsel von einem erstem Betriebszustand, in dem die Betriebsgrößen des Kühlgeräts an der Benutzerschnittstelle eingegeben bzw. angezeigt werden, zu einem zweiten Betriebszustand notwendig, in dem die Daten für die Steuereinheit 18 vorgesehen sind. Der Wechsel zwischen dem ersten Betriebszustand und dem zweiten Betriebszustand erfolgt dabei über eine entsprechende Benutzereingabe an der Benutzerschnittstelle 12.

Ein Beispiel für eine derartige Menüführung ist in Fig. 2 gezeigt. Man erkennt, dass auf dem Bildschirmbereich der Benutzerschnittstelle 12 eine Eingabe über entsprechende Eingabefelder E1 bzw. E2 in Form eines Benutzermenüs erfolgen kann. Des Weiteren kann als Anzeigebereich der Bildschirmbereich der Benutzerschnittstelle 12 außerhalb der Eingabefelder E1 bzw. E2 verwendet werden. Die Oberfläche des Bildschirmbereichs der Benutzerschnittstelle 12 kann berührungssensitiv sein, wobei aber eine Ausführung mit Tasten, Knöpfen oder dergleichen nicht ausgeschlossen ist.

Neben der Möglichkeit der Dateneingabe bzw. Datenausgabe mittels der Benutzerschnittstelle 12 kann die Steuereinheit 18 noch über ein oder mehrere Drahtlos-Schnittstellen 30 verfügen, die beispielsweise als WLAN- oder GSM-Schnittstelle ausgeführt sein kann. Die Ausgestaltung der Drahtlos-Schnittstelle 30 als WLAN-Verbindung ermöglicht beispielsweise die Verwendung eines Mobiltelefons 32, das von einem Benutzer während des Betriebs des Sattelzugs 2 mitgeführt werden kann. Falls die Drahtlos-Schnittstelle 30 als GSM-Modul ausgeführt ist, wäre auch die Übertragung von Daten beispielsweise durch einen Spediteur oder dergleichen möglich.

Die erfindungsgemäße Ausgestaltung des Nutzfahrzeuganhängers 6 ermöglicht somit die Eingabe bzw. Ausgabe von Daten einer Steuereinheit 18 über unterschiedliche Kanäle, so dass neben einer Benutzerschnittstelle 12 noch mobile oder stationäre Eingabegeräte in Frage kommen können. Die Eingabe bzw. Ausgabe von Daten erfolgt dabei völlig unabhängig von der elektronischen Bremssteuereinrichtung 24, die typischerweise auch über die Verbindung 28 eine Datenein- bzw. -ausgabe an dem Zugfahrzeug 4 ermöglicht. Somit kann die Steuereinheit 18 mit Funktionen belegt werden, die nicht Bestandteil des standardisierten Verbindungsprotokolls zwischen dem Zugfahrzeug 4 und dem Nutzfahrzeuganhänger 6 sind.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

Liste der Bezugszeichen:
- 2: Sattelzug
- 4: Zugfahrzeug
- 6: Nutzfahrzeuganhänger
- 8: Kühlkoffer
- 10: Kühlgerät
- 12: Benutzerschnittstelle
- 14: Drucker
- 16: Kommunikationsschnittstelle
- 16': Kommunikationsschnittstelle
- 18: Steuereinheit
- 20: Fernwirkungseinheit
- 22: Datenschnittstelle
- 24: Bremssteuereinrichtung
- 26: Kommunikationsschnittstelle
- 28: Verbindung
- 30: Drahtlos-Schnittstelle
- 32: Mobiltelefon

## Patentansprüche

1. Nutzfahrzeuganhänger, insbesondere ein Kühlsattelauflieger oder ein Kühlanhänger, der ein Kühlgerät (10) zur Kühlung eines Frachtraums, das eine Benutzerschnittstelle (12) zur Eingabe und zur Anzeige wenigstens einer Betriebsgröße aufweist, umfasst,
**dadurch gekennzeichnet, dass** der Nutzfahrzeuganhänger eine außerhalb einer elektronischen Bremssteuereinrichtung (24) angeordnete Steuereinheit (18) umfasst, die mit wenigstens einer Fernwirkungseinheit (20) gekoppelt ist, wobei die Benutzerschnittstelle (12) und die Steuereinheit (18) über eine Kommunikationsschnittstelle (16) miteinander verbunden sind, wobei die Benutzerschnittstelle (12) ausgebildet ist für eine Datenausgabe der Steuereinheit (18) und eine Dateneingabe an die Steuereinheit (18).

2. Nutzfahrzeuganhänger nach Anspruch 1, bei dem die Kommunikationsschnittstelle (16) zum Betrieb eines Datenaufzeichnungsgeräts, insbesondere eines Druckers koppelbar ist.

3. Nutzfahrzeuganhänger nach Anspruch 1 oder 2, bei dem die Steuereinheit (18) über eine weitere Kommunikationsschnittstelle (16') mit der elektronischen Bremssteuereinrichtung (24) verbindbar ist.

4. Nutzfahrzeuganhänger nach Anspruch 1 bis 3, bei dem die Kommunikationsschnittstelle (16) und/oder die weitere Kommunikationsschnittstelle (16') als CAN-Bus ausgebildet sind.

5. Nutzfahrzeuganhänger nach einem der Ansprüche 1 bis 4, bei dem die Benutzerschnittstelle (12) so ausgeführt ist, dass die Ausgabe von Daten der Steuereinheit (18) und die Eingabe bzw. Ausgabe der Betriebsgröße des Kühlgeräts (10) in unterschiedlichen Bereichen der Benutzerschnittstelle (12) erfolgt.

6. Nutzfahrzeuganhänger nach einem der Ansprüche 1 bis 5, ausgebildet für einen Wechsel zwischen einem ersten Betriebszustand zur Eingabe bzw. Ausgabe der Betriebsgröße des Kühlgeräts (10) und einem zweiten Betriebszustand zur Ausgabe von Daten der Steuereinheit (18).

7. Nutzfahrzeuganhänger nach Anspruch 6, bei dem der Wechsel der Betriebszustände mittels einer Benutzereingabe an der Benutzerschnittstelle (12) des Kühlgeräts (10) erfolgt.

8. Nutzfahrzeuganhänger nach Anspruch 6 oder 7, bei dem die Benutzerschnittstelle (12) zwischen dem ersten Betriebszustand und dem zweiten Betriebszustand umschaltbar ist, sobald eine Datenübertragung zwischen der Steuereinheit (18) und der Benutzerschnittstelle (12) erfolgt.

9. Nutzfahrzeuganhänger nach einem der Ansprüche 1 bis 8, bei dem die Steuereinheit (12) über eine Drahtlos-Schnittstelle (30) mit einer weiteren Benutzerschnittstelle, insbesondere in Form eines Mobiltelefons (32) verbindbar ist.

10. Nutzfahrzeuganhänger nach einem der Ansprüche 1 bis 9, bei dem die Steuereinheit dazu ausgebildet ist interne Statusinformation und/oder von der Fernwirkungseinheit empfangene Messwerte an die Benutzerschnittstelle (12) zu übertragen.

11. Nutzfahrzeuganhänger nach einem der Ansprüche 1 bis 10, bei dem die Steuereinheit (18) dazu ausgebildet ist an der Benutzerschnittstelle (12) eingegebene Daten intern zu verarbeiten und/oder an die wenigstens eine Fernwirkungseinheit (20) zu übertragen.

## Claims

1. Commercial vehicle trailer, in particular a refrigerated semi-trailer or refrigerated trailer, comprising a cooling device (10) for cooling a cargo space, which device has a user interface (12) for inputting and displaying at least one operating variable,
**characterized in that** the commercial vehicle trailer has a control unit (18) which is arranged outside an electronic brake control means (24) and is coupled to at least one remote action unit (20), the user interface (12) and the control unit (18) being connected to one another via a communication interface (16), the user interface (12) being designed for data output from the control unit (18) and data input to the control unit (18).

2. Commercial vehicle trailer according to claim 1, wherein the communication interface (16) can be coupled for operating a data recording device, in particular a printer.

3. Commercial vehicle trailer according to either claim 1 or claim 2, wherein the control unit (18) can be connected to the electronic brake control means (24) via a further communication interface (16').

4. Commercial vehicle trailer according to claims 1 to 3, wherein the communication interface (16) and/or the further communication interface (16') are designed as a CAN bus.

5. Commercial vehicle trailer according to any of claims 1 to 4, wherein the user interface (12) is designed such that the output of data from the control unit (18) and the input or output of the operating variable of the cooling device (10) take place in different regions of the user interface (12).

6. Commercial vehicle trailer according to any of claims 1 to 5, designed for a change between a first operating state for inputting or outputting the operating variable of the cooling device (10) and a second operating state for outputting data from the control unit (18).

7. Commercial vehicle trailer according to claim 6, wherein the change in operating states takes place by means of a user input at the user interface (12) of the cooling device (10).

8. Commercial vehicle trailer according to either claim 6 or claim 7, wherein the user interface (12) can be switched between the first operating state and the second operating state as soon as data are transmitted between the control unit (18) and the user interface (12).

9. Commercial vehicle trailer according to any of claims 1 to 8, wherein the control unit (12) can be connected to a further user interface, in particular in the form of a mobile phone (32), via a wireless interface (30).

10. Commercial vehicle trailer according to any of claims 1 to 9, wherein the control unit is designed to transmit internal status information and/or measurement values received from the remote control unit to the user interface (12).

11. Commercial vehicle trailer according to any of claims 1 to 10, wherein the control unit (18) is designed to internally process data entered at the user interface (12) and/or to transmit said data to the at least one remote action unit (20).

## Revendications

1. Remorque de véhicule utilitaire, en particulier semi-remorque de compartiment frigorifique ou remorque frigorifique, qui comprend un dispositif de refroidissement (10) destiné à refroidir un espace de transport possédant une interface utilisateur (12) destinée à l'entrée et à l'affichage d'au moins une grandeur de fonctionnement,
**caractérisée en ce que** la remorque de véhicule utilitaire comprend une unité de commande (18) disposée à l'extérieur d'un système électronique de commande de frein (24), laquelle unité de commande est accouplée à au moins une unité d'action à distance (20), l'interface utilisateur (12) et l'unité de commande (18) étant reliées l'une à l'autre par l'intermédiaire d'une interface de communication (16), l'interface utilisateur (12) étant conçue pour une sortie de données de l'unité de commande (18) et pour une entrée de données vers l'unité de commande (18).

2. Remorque de véhicule utilitaire selon la revendication 1, dans laquelle l'interface de communication (16) peut être accouplée afin de faire fonctionner un dispositif d'enregistrement de données, en particulier une imprimante.

3. Remorque de véhicule utilitaire selon la revendication 1 ou 2, dans laquelle l'unité de commande (18) peut être reliée au système électronique de commande de frein (24) par l'intermédiaire d'une autre interface de communication (16').

4. Remorque de véhicule utilitaire selon les revendications 1 à 3, dans laquelle l'interface de communication (16) et/ou l'autre interface de communication (16') sont conçues comme un bus CAN.

5. Remorque de véhicule utilitaire selon l'une des revendications 1 à 4, dans laquelle l'interface utilisateur (12) est réalisée de telle sorte que la sortie de données de l'unité de commande (18) et l'entrée ou la sortie de la grandeur de fonctionnement du dispositif de refroidissement (10) sont effectuées dans différentes zones de l'interface utilisateur (12).

6. Remorque de véhicule utilitaire selon l'une des revendications 1 à 5, conçue pour un changement entre un premier état de fonctionnement destiné à l'entrée ou à la sortie de la grandeur de fonctionnement du dispositif de refroidissement (10) et un second état de fonctionnement destiné à la sortie de données de l'unité de commande (18).

7. Remorque de véhicule utilitaire selon la revendication 6, dans laquelle le changement des états de fonctionnement est effectué au moyen d'une entrée utilisateur au niveau de l'interface utilisateur (12) du dispositif de refroidissement (10).

8. Remorque de véhicule utilitaire selon la revendication 6 ou 7, dans laquelle l'interface utilisateur (12) peut être commutée entre le premier état de fonctionnement et le second état de fonctionnement dès qu'une transmission de données est effectuée entre l'unité de commande (18) et l'interface utilisateur (12).

9. Remorque de véhicule utilitaire selon l'une des revendications 1 à 8, dans laquelle l'unité de commande (12) peut être reliée à une autre interface utilisateur, en particulier sous la forme d'un téléphone mobile (32), par l'intermédiaire d'une interface sans fil (30).

10. Remorque de véhicule utilitaire selon l'une des revendications 1 à 9, dans laquelle l'unité de commande est conçue pour transmettre, à l'interface utilisateur (12), des informations de statut interne et/ou des valeurs de mesure reçues de l'unité d'action à distance.

11. Remorque de véhicule utilitaire selon l'une des revendications 1 à 10, dans laquelle l'unité de commande (18) est conçue pour traiter en interne des données entrées au niveau de l'interface utilisateur (12) et/ou pour transmettre celles-ci à l'au moins une unité d'action à distance (20).
